# EUROPÄISCHE PATENTSCHRIFT

(11) **EP 1 938 443 B1**
(45) Veröffentlichungstag und Bekanntmachung des Hinweises auf die Patenterteilung: **20.11.2019**
(21) Anmeldenummer: 06806765.1
(22) Anmeldetag: 12.09.2006
(51) Int. Cl.: H02K 19/38, H02K 55/04, H02K 11/00

(54) **SYNCHRONMASCHINE**
SYNCHRONOUS MACHINE
MACHINE SYNCHRONE

(30) Priorität: 30.09.2005 DE 102005047451
(43) Veröffentlichungstag der Anmeldung: 02.07.2008
(73) Patentinhaber: Siemens Aktiengesellschaft, 80333 München (DE)
(72) Erfinder: CORDES, Ralf, 91058 Erlangen (DE); WEIGEL, Jan, 91077 Grossenbuch (DE); WILKE, Markus, 91054 Erlangen (DE)
(86) Internationale Anmeldenummer: PCT/EP2006/066275
(87) Internationale Veröffentlichungsnummer: WO 2007/036429

(56) Entgegenhaltungen:
- WO-A-03/047077
- CA-A- 1 101 976
- GB-A- 1 454 211
- US-A- 3 714 483
- US-A- 4 745 315
- US-A- 5 097 163

## Beschreibung

Die Erfindung bezieht sich auf eine Synchronmaschine, enthaltend eine Ständerwicklung und eine Polradinduktivität, mit einer Erregereinrichtung zur Ansteuerung und Überwachung der Polradinduktivität gemäß dem Oberbegriff des Patentanspruches 1

Für Synchronmaschinen zur Verwendung als elektrischer Generator oder Motor sind spezifische Erregereinrichtungen vorgesehen. Insbesondere bei Maschinen mit supraleitenden Erregerwicklungen, bei denen der Strom gezielt auf- und abgebaut werden muss, sind Erregereinrichtungen bestehend aus Inverter, Übertrager und Synchrongleichrichter geeignet, wie sie beispielsweise in parallelen Anmeldungen der Anmelderin mit gleicher Priorität beschrieben werden.

Der Einbauort einer solchen Erregereinrichtung sollte möglichst nah an der Polradinduktivität liegen, um die Verluste auf Zuleitungen zu minimieren. Insbesondere bei solchen supraleitenden Wicklungen, die in HTS (High Temperature Superconducting)-Technologie aufgebaut sind, muss ein Schutz für die supraleitende Polradinduktivität implementiert werden, der möglichst nah an der supraleitenden Induktivität angebracht sein soll, um die Wahrscheinlichkeit eines Kabelbruchs und der damit verbundenen Zerstörung der supraleitenden Polradinduktivität auszuschließen bzw. so gering wie möglich zu halten.

Problematisch für letztere Erregereinrichtung sind das durch die Ströme im Wickelkopf erzeugte magnetische Feld einerseits und das aus dem Luftspalt austretende Ständer- und Rotorstreufeld andererseits. Diese unerwünschten Magnetfelder können eine dort befindliche Elektronik stören sowie insbesondere die ferromagnetischen Materialien des Übertragers in Sättigung bringen und damit funktionslos werden lassen.

Aus der GB 1 454 211 A ist eine supraleitende Maschine bekannt, in der eine abschirmende kurzgeschlossene Hilfswicklung zur Abschirmung der supraleitenden Spule von magnetischen Feldern aus anderen Teilen der elektrischen Maschine verwendet wird.

Aus der US 5,097,163 A ist ein bürstenloser Generator bekannt, bei dem Abschirmungen aus leitfähigem Material vorgesehen sind.

Aus der US 3,714,483 ist eine elektrische Maschine mit Abschirmungen bekannt, wobei die Abschirmungen mehrlagig aus nichtmagnetischen Metallen und solchen mit hoher Permeabilität aufgebaut sind.

Aus der CA 1 101976 ist ein Abgeschirmter und belüfteter Generatoranschlusskasten bekannt, bei dem eine Abschirmung, aus einem magnetischen Material mit niedriger Leitfähigkeit und hoher Permeabilität hergestellt ist. Aus der WO 03/047077 A ist eine Vorrichtung zur Versorgung wenigstens einer supraleitenden Wicklung mit elektrischer Energie bekannt, die wenigstens eine elektrische Energiequelle und einen Transformator zur Übertragung der Energie zwischen der Energiequelle und dem Supraleiter umfasst. Ausgehend vom Stand der Technik ist es Aufgabe der Erfindung, bei Einbau einer berührungslosen Energie- und Datenübertragung in den verfügbaren Raum unterhalb des Ständerwickelkopfes Störungen zu vermeiden. Insbesondere soll dabei gleichermaßen ein spezielles Schutzkonzept für eine vorteilhafte Verwendung von HTS-Spulen auf dem Polrad genutzt werden können.

Die Aufgabe ist erfindungsgemäß durch die Merkmale des Patentanspruches 1 gelöst. Weiterbildungen sind in den abhängigen Ansprüchen angegeben.

Mit der Erfindung wird eine - in Bezug auf den Maschinenaufbau - innen liegende Erregereinrichtung für elektrische Maschinen mit berührungsloser Energieübertragung und magnetischer Abschirmung realisiert.

Die Erfindung wird vorzugsweise bei einer Maschine mit supraleitenden Wicklungen, insbesondere aus HTS-Material, realisiert. Die Erfindung ist aber auch bei allen bekannten Synchron-Maschinen anwendbar.

Mit der Erfindung wird erreicht, dass insbesondere die störenden Fremdfelder von Ständer- und Läuferwicklungen in geeigneter Weise geschwächt werden. Damit kann ein berührungsloses Energieübertragungsverfahren mit einer induktiven Kopplung von Magnetkernmaterialien, insbesondere von dort vorhandenen Ferriten, erstmalig voll genutzt werden.

Bekannt war nämlich vom Stand der Technik, dass die magnetische Flussdichte am Einbauort der Erregereinrichtung einige 10 mT beträgt. Durch die in der Erregereinrichtung enthaltenden magnetischen Komponenten, wie insbesondere die Ferrite, wird aber der Feldverlauf derart verzerrt, dass diese Komponenten magnetisch gesättigt sind und somit häufigwie oben bereits erwähnt - nicht mehr bestimmungsgemäß funktionieren.

Mit der Erfindung lassen sich demgegenüber gezielt geforderte Feldverläufe vorgeben und insbesondere die Bereiche der Erregereinrichtung mit der empfindlichen Elektronik von störenden Feldern, die die Funktionsweise einzelner Komponenten der Elektronik beeinträchtigen könnten, befreien.

In zweckgerichteter Weiterbildung der Erfindung sind unterschiedliche Ausführungen für die Ausbildung der Abschirmung gleichermaßen als Gehäuse möglich, wobei auch eine Kombination der Varianten möglich ist.

Weitere Einzelheiten und Vorteile der Erfindung ergeben sich aus der nachfolgenden Figurenbeschreibung von Ausführungsbeispielen in Verbindung mit den Patentansprüchen. Es zeigen
- Figur 1: eine schematische Schnittdarstellung einer elektrischen Synchronmaschine mit Ständerwicklung, Polrad und Erregereinrichtung einschließlich Übertrager,
- Figur 2: eine Ansicht von vorne auf die elektrische Maschine gemäß Figur 1,
- Figur 3: eine Ansicht von vorne auf einen Schnitt der elektrischen Maschine gemäß Figur 1 längs der Linie III-III, Figur 4 eine Alternative für die Abschirmung gemäß Figur 1 als Teilausschnitt und
- Figur 5: einen Ausschnitt eines Schirmen mit zusätzlichen Elementen.

Die Figuren werden nachfolgend teilweise gemeinsam beschrieben. Gleiche oder gleichwirkende Teile haben gleiche Bezugszeichen.

In den Figuren ist eine elektrische Maschine dargestellt, die entweder als elektrischer Generator oder als Motor arbeitet. Wesentlich für eine derartige Maschine ist eine rotierende Welle 2, die in wenigstens zwei Lagern 3, 3' gelagert ist.

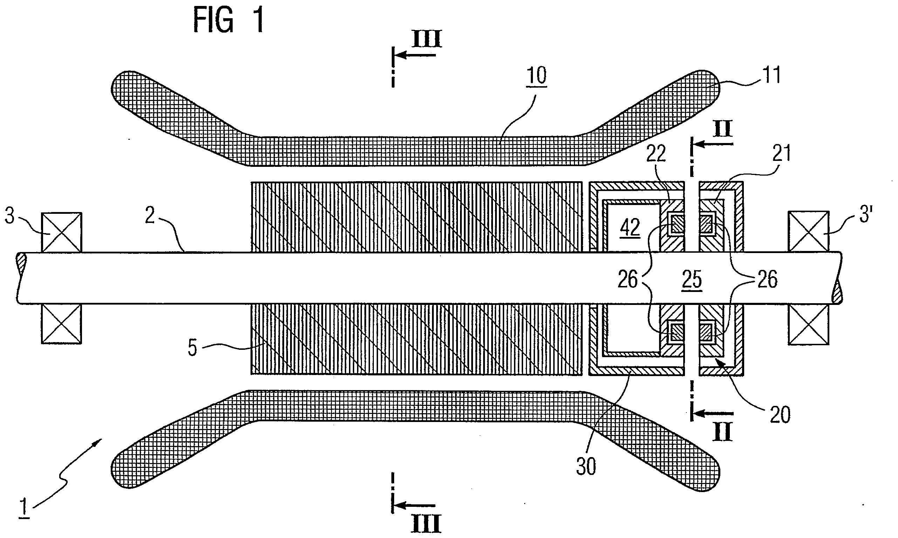

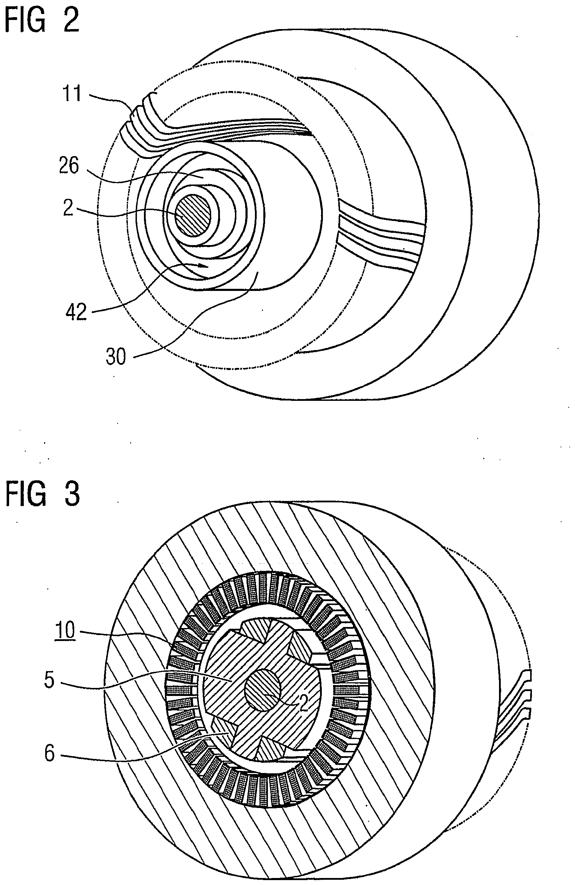

Aus der schematischen Darstellung gemäß Figur 1 ist ersichtlich, dass auf der Welle 2 ein Polrad 5 angeordnet ist, auf dem sich Wicklungen, insbesondere supraleitende Wicklungen aus HTS-Material, befinden, was weiter unten anhand der Figuren 2 und 3 deutlich wird.

In Figur 1 ist weiterhin ersichtlich, dass gegenüber dem Polrad 5 als Rotor eine Ständerwicklung 10 mit Wickelköpfen 11, 11' vorhanden ist.

Speziell in Figur 1 ist eine Erregereinrichtung 20 vorhanden, die im Wesentlichen aus einem feststehenden Teil 21 und einem rotierenden Teil 22 besteht. Beide Teile 21 und 22 weisen Wicklungen zur Spannungsübertragung auf, wobei im Wesentlichen eine höhere Spannung auf eine niedrigere Spannung transformiert wird und mit der niedrigeren Spannung im bewegten Teil, d.h. auf der Welle 2, die Erregereinrichtung 20 betrieben wird.

In Figur 1 befindet sich die Erregereinrichtung 20 als kompakte Einheit auf der rotierenden Welle 2 und wird durch einen Übertrager 25 zur Übertragung von elektrischer Leistung vom feststehenden Teil 21 zum rotierenden Teil 22 auf der Welle 2 aktiviert. Die Erregereinrichtung 20 beinhaltet einen Schaltungsaufbau mit elektronischen Bauteilen, auf die in diesem Zusammenhang nicht näher eingegangen wird. Da die elektronischen Bauteile empfindlich gegen Fremdfelder sind, ist eine Abschirmung 30 notwendig, auf die nachfolgend eingegangen wird.

Die Abschirmung 30 kann aus einem kompletten Hohlzylinder bestehen, der als Gehäuse über die gesamte Erregereinrichtung

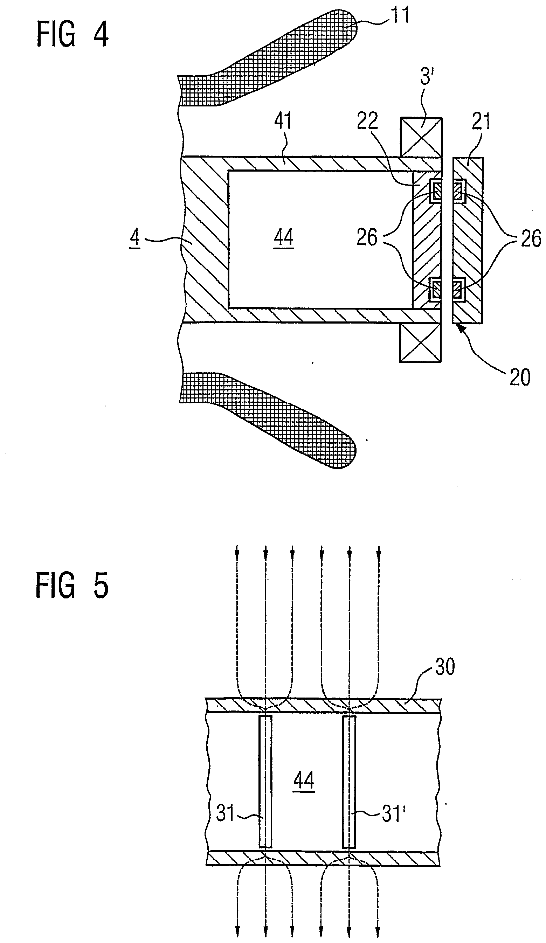

20 einschließlich Übertrager 25 geschoben wird. Die Abschirmung 30 kann aber auch aus einzelnen Elementen, wie einzelnen Ferritringen 31, bestehen, was anhand der weiteren Figur 5 ersichtlich wird.

Das Gehäuse bzw. die Abschirmung 30 besteht vorteilhafterweise aus magnetisch gut leitfähigem Material, wie insbesondere aus SMC (Soft Magnetic Composites) Werkstoffen, die durch magnetische Einlagerungen die geforderten magnetischen Eigenschaften realisieren, trotzdem elektrisch sehr schlecht leitfähig sind. Diese Eigenschaften können auch durch eine Schicht auf der Wandung des Gehäuses 30 erreicht werden, dass dann vorteilhafterweise aus Nichteisen-Material, beispielsweise Kohlefaser od. dgl., bestehen kann. Darauf wird weiter unten noch im Einzelnen eingegangen.

Die Abschirmung 30 kann mit der Welle 2 nicht mitdrehend oder aber mitdrehend ausgebildet sein. Der Vorteil der ersten Alternative, d.h. einer nicht mitdrehenden Abschirmung, besteht insbesondere in einem mechanisch einfacheren Aufbau. Bei einem solchen Aufbau ergeben sich insbesondere keine aufzunehmenden Fliehkräfte durch die rotierenden Abschirmung.

Bei der zweiten Alternative einer mitdrehenden Anordnung der Abschirmung treten dagegen keine störenden Wirbelströme durch ein synchron umlaufendes Drehfeld der Synchronmaschine auf.

Für die praktische Anwendung wird bei Auswahl der nicht mitdrehenden oder drehenden Anordnung der Abschirmung die Anordnung der Erregereinrichtung 20 in Bezug auf die Ständerwicklung 10 berücksichtigt. Insbesondere wenn die Erregereinrichtung unmittelbar unter den Wickelköpfen 11 angeordnet ist, wird eine mitdrehende Anordnung zu bevorzugen sein. Ansonsten ist die stationäre Anordnung der Abschirmung als vorteilhaft zu wählen.

Bei einer spezifischen Anordnung gemäß Figur 4, die durch Abwandlung der Figur 1 gebildet wird, ist in eine Welle 4 im endständigen Bereich 41 ein Hohlraum 44 eingebracht, so dass ein innerer, bereits magnetisch abgeschirmten Freiraum für die magnetisch empfindliche Erregerelektronik gebildet wird.

Letzteres ist insbesondere bei Maschinen großer Leistung sinnvoll, bei denen die Welle einen hinreichend großen Durchmesser hat. Bei geringeren Durchmessern kann die Welle 2 aus Figur 1 im endständigen Bereich erweitert und als Hohlzylinder 41 mit dem inneren Freiraum 44 ausgebildet sein. Für diesen Fall muss das Lager 3' geändert werden, während der feststehende Teil der Erregereinrichtung 20 mit den Transformatorwicklungen des Übertragers 25 im Wesentlichen gleich bleibt.

Es kann im Freiraum 44 des erweiterten Teils 41 der Welle 4 eine Aufnahme für die komplette Erregereinrichtung 20 mit der zugehörigen Elektronik vorgesehen sein. Besonders vorteilhaft ist dabei, dass im Fall einer Welle aus magnetischem Material, die gleichermaßen als magnetische Abschirmung dient, die Fliehkräfte deutlich geringer gehalten werden, da sich bei einer achsnahen Anordnung der Erregerelektronik ein im Vergleich zu Figur 1 insgesamt verringerter Durchmesser der Erregereinrichtung ergeben kann.

Aus den Figuren 2 und 3 ist der äußere Aufbau der oben beschriebenen Maschine erkennbar. Insbesondere in der Sicht auf den Schnitt gemäß Figur 3 ist das Polrad 5 auf der drehenden Welle 2 erkennbar, auf dem sich die Läuferwicklung, insbesondere eine supraleitende Spule 6 aus HTS-Material, befindet.

In Figur 2 ist die Erregerelektronik nur pauschal angedeutet, mit der die Übertragung des Energieein- oder -austrages einerseits und die Steuerung der supraleitenden Spule 6 im kalten Bereich andererseits gewährleistet ist.

Wesentlich ist, dass bei der Montage der Bauteile, die zu der Erregereinrichtung außerhalb bzw. ggf. innerhalb einer Maschienenwelle gehören, die Abschirmung ein Gehäuse realisiert, das sämtliche Komponenten umschließt. Speziell in Figur 1 ist dieses Gehäuse leicht austauschbar und dadurch zuverlässiger und Platz sparender im Vergleich zu separaten Gehäusen, wie sie beim Stand der Technik alternativ innerhalb des kalten Bereichs, warmen Bereichs und außerhalb des gesamten Maschinengehäuses vorhanden sind. Durch die kompakte Anordnung können dabei insbesondere die Zuleitungen verringert werden.

Bei der oben bereits erläuterten Alternative gemäß Figur 4 ergibt sich ein bis auf den Erregerbereich im Wesentlichen gleicher Aufbau der elektrischen Maschine entsprechend Figur 1. Ein separates Gehäuse ist hier überflüssig. Wesentlich ist vielmehr, dass die Maschinenwelle sich in dem Erreger zugewandten Bereich erweitert und in seinem Freiraum die Erregereinrichtung aufnimmt.

Der hohlzylindrische Wellenteil kann, sofern er - wie die Welle - aus magnetisch leitfähigem Material besteht, also in Figur 4 neben der Aufnahme für die Erregereinrichtung gleichermaßen die Abschirmung für die Erregerelektronik bilden. Damit ist ein besonders kompakter Aufbau der Maschine möglich.

In Figur 5 sind in einem als Abschirmung wirkenden Hohlzylinder 30' Elemente 31, 31', ... zur Flussführung in radialer Richtung eingebracht. Solche Elemente 31, 31', ... werden durch Stege oder Scheiben aus einem Material guter magnetischer Leitfähigkeit realisiert und sind im Abstand innerhalb des Hohlzylinders 30' bei minimalem radialem Luftspalt angeordnet.

Mit einer solchen Anordnung wird bewirkt, dass ein magnetisches Feld in geeigneter Weise vom Innenraum des Hohlzylinders, in dem sich die Erregerelektronik mit gegen Magnetfelder empfindlichen Bauteilen befindet, ferngehalten wird. Insbesondere dann, wenn diametrale Felder maßgebend sind, lässt sich so die Stärke der äußeren Abschirmung 30' verringern.

Bei Verwendung von flächigen Scheiben als Feldführungselemente sind vorteilhafterweise Leitungsdurchführungen für die Bauelemente der Erregerelektronik im Innern des Zylinders vorhanden.

In Figur 5 sind einzelne Feldlinien angedeutet. Die spezifische Anordnung gemäß Figur 5 wirkt also als Flusskonzentrator, mit dem der Feldverlauf der magnetischen Felder in gewünschter Weise beeinflusst werden kann.

In den Figuren 1 bis 5 ist das Material der Abschirmung 30 jeweils magnetisch leitfähiger Stahl. Ein alternativer Werkstoff mit hoher Permeabilität und geringer anisotroper elektrischer Leitfähigkeit ist beispielsweise auch durch sog. "Soft Magnetic Composites" (SMC) gegeben. Derartige Compound-Werkstoffe sind insbesondere sinterfähig und daher leicht in die gewünschte Form bringbar.

Gemäß der Erfindung enthält die Abschirmung eine äußere Hülle, bestehend aus magnetisch nicht leitendem Material, auf der die eigentliche magnetische Abschirmung durch Beschichtung mit einem Material hoher Permeabilität gebildet ist. In diesem Fall kann die äußere Hülle aus korrosionsbeständigem Material, z. B. Edelstahl, bestehen, wobei insbesondere auf der Innenseite sich die Beschichtung aus dem Material hoher Permeabilität befindet.

Schließlich ist es auch möglich, für die Abschirmung eine äußere Hülle aus magnetisch nicht leitendem Material zu verwenden, wobei die eigentliche magnetische Abschirmung durch Ringe aus einem Material hoher Permeabilität, beispielsweise Mu-Metall, gebildet wird.

## Patentansprüche

1. Synchronmaschine, enthaltend eine Ständerwicklung (10) und eine Polradinduktivität (5), mit einer Erregereinrichtung (20) zur Ansteuerung und Überwachung der Polradinduktivität (5), bestehend aus einem Übertrager (25) zur bidirektionalen Übertragung von Energie auf die Polradinduktivität (5), insbesondere eine supraleitende Induktivität, wobei zur Schwächung von Fremdfeldern in der Erregereinrichtung (20) eine Abschirmung (30) zur Schwächung der durch die Ströme im Wickelkopf (11), der Ständerwicklung (10) sowie durch die Induktivität des Polrades (5) erzeugten magnetischen und elektrischen Felder vorhanden ist und das Material der Abschirmung (30) ein Werkstoff mit hoher Permeabilität und geringer elektrischer Leitfähigkeit ist, wobei die Abschirmung (30, 30') eine äußere Hülle, bestehend aus magnetisch nicht leitendem Material, enthält und die eigentliche magnetische Abschirmung durch Beschichtung der Hülle mit einem Material hoher Permeabilität gebildet ist oder durch Ringe aus einem Material hoher Permeabilität, beispielsweise Mu-Metall, besteht.

2. Synchronmaschine nach Anspruch 1, wobei zwei Lager für die Polradinduktivität (5) der Maschine vorhanden sind, **dadurch gekennzeichnet, dass** die Erregereinrichtung (20) zwischen den beiden Lagern (3, 3') angeordnet ist.

3. Synchronmaschine nach Anspruch 1 oder Anspruch 2, **dadurch gekennzeichnet, dass** die Abschirmung (30) mitdrehend ausgebildet ist.

4. Synchronmaschine nach einem der Anspruch 1 oder Anspruch 2, **dadurch gekennzeichnet, dass** die Abschirmung (30) nicht mitdrehend ausgebildet ist.

5. Synchronmaschine nach einem der Ansprüche 1 bis 4, **dadurch gekennzeichnet, dass** das Material der Abschirmung (30) ein sog. "Soft Magnetic Composites" (SMC) ist.

6. Synchronmaschine nach Anspruch 1, **dadurch gekennzeichnet, dass** die Abschirmung als Hohlzylinder (30) ausgebildet ist, wobei der Hohlzylinder (30) als Hülle ein Teil- oder Gesamtgehäuse für die Erregereinrichtung (20) bildet.

7. Synchronmaschine nach Anspruch 3, **dadurch gekennzeichnet, dass** die mitdrehende Abschirmung (30) das rotierende Gesamtgehäuse der Erregereinrichtung (20) bildet bzw. umschließt.

8. Synchronmaschine nach einem der vorangehende Ansprüche, **dadurch gekennzeichnet, dass** die äußere Hülle aus korrosionsbeständigem Material, z. B. Edelstahl, besteht und dass sich die Beschichtung mit dem Material hoher Permeabilität auf der Innenseite der Hülle befindet.

9. Synchronmaschine nach einem der vorhergehenden Ansprüche, **dadurch gekennzeichnet, dass** das Gehäuse (30) ganz oder teilweise austauschbar ausgebildet ist.

10. Synchronmaschine nach einem der vorhergehenden Ansprüche, **dadurch gekennzeichnet, dass** die Erregereinrichtung (20) aus einem rotierenden Teil und einem feststehenden Teil besteht, die zur berührungslosen Energieübertragung mittels eines Übertragers (25) gekoppelt sind.

11. Synchronmaschine nach einem der vorhergehenden Ansprüche, **dadurch gekennzeichnet, dass** der Übertrager (25) Ferritringe (26) enthält.

12. Synchronmaschine nach Anspruch 14, die eine Welle (4) größeren Durchmessers enthält, **dadurch gekennzeichnet, dass** der rotierende Teil der Erregereinrichtung (20) einschließlich Erregerelektronik in einem Freiraum (42) innerhalb der Welle (4, 41) angeordnet ist.

13. Synchronmaschine nach Anspruch 6, **dadurch gekennzeichnet, dass** innerhalb der hohlzylindrischen Abschirmung wenigstens ein Element (31, 31') aus magnetisch gut leitfähigem Material vorhanden ist, das als Feldkonzentrator fungiert.

14. Synchronmaschine nach Anspruch 17, **dadurch gekennzeichnet, dass** das wenigstens eine Element (31, 31') aus in radialer Richtung magnetisch gut leitfähigem Material sind und Leitungsdurchführungen für die beidseitig des Elementes (31, 31') verteilte Erregerelektronik aufweist.

## Claims

1. Synchronous machine, containing a stator winding (10) and a rotor inductance (5), with an excitation device (20) for driving and monitoring the rotor inductance (5), comprising a transformer (25) for the bidirectional transmission of energy to the rotor inductance (5), in particular a superconducting inductance, wherein, in order to weaken external fields in the excitation device (20), a shield (30) for weakening the magnetic and electric fields which are produced by the currents in the winding head (11) of the stator winding (10) and by the inductance of the rotor (5) is provided and the material of the shield (30) is a material with high permeability and low electrical conductivity wherein the shield (30, 30') contains an outer covering, made of magnetically nonconductive material, and the actual magnetic shield is formed by the covering being coated with a material of high permeability or by rings made of a material of high permeability, for example Mu metal.

2. Synchronous machine according to Claim 1, two mounts for the rotor inductance (5) of the machine being provided, **characterized in that** the excitation device (20) is arranged between the two mounts (3, 3').

3. Synchronous machine according to Claim 1 or Claim 2, **characterized in that** the shield (30) is designed such that it concomitantly rotates.

4. Synchronous machine according to one of Claim 1 or Claim 2, **characterized in that** the shield (30) is designed such that it does not concomitantly rotate.

5. Synchronous machine according to one of Claims 1 to 4, **characterized in that** the material of the shield (30) is a so-called "soft magnetic composite" (SMC).

6. Synchronous machine according to Claim 1, **characterized in that** the shield is in the form of a hollow cylinder (30), the hollow cylinder (30) forming, as a covering, a partial or entire housing for the excitation device (20).

7. Synchronous machine according to Claim 3, **characterized in that** the concomitantly rotating shield (30) forms or surrounds the rotating entire housing of the excitation device (20) .

8. Synchronous machine according to one of the preceding claims **characterized in that** the outer covering is made of corrosion-resistant material, for example stainless steel, and **in that** the coating with the material of high permeability is located on the inside of the covering.

9. Synchronous machine according to one of the preceding claims, **characterized in that** the housing (30) is designed to be entirely or partially replaceable.

10. Synchronous machine according to one of the preceding claims, **characterized in that** the excitation device (20) comprises a rotating part and a fixed part, which are coupled for contactless energy transmission by means of a transformer (25) .

11. Synchronous machine according to one of the preceding claims, **characterized in that** the transformer (25) contains ferrite rings (26).

12. Synchronous machine according to Claim 10, which contains a shaft (4) having a relatively large diameter, **characterized in that** the rotating part of the excitation device (20) including excitation electronics is arranged in a free space (42) within the shaft (4, 41).

13. Synchronous machine according to Claim 6, **characterized in that** at least one element (31, 31') made of magnetically highly conductive material is provided within the hollow-cylindrical shield and acts as a field concentrator.

14. Synchronous machine according to Claim 13, **characterized in that** the at least one element (31, 31') is made of material which is magnetically highly conductive in the radial direction and has line bushings for the excitation electronics distributed on both sides of the element (31, 31').

## Revendications

1. Machine synchrone, comportant un enroulement (10) statorique et une inductance (5) à roue polaire, comprenant un dispositif (20) d'excitation pour commander et contrôler l'inductance (5) à roue polaire, constitué d'un transmetteur (25) pour la transmission bidirectionnelle d'énergie à l'inductance (5) à roue polaire, notamment à une inductance supraconductrice, dans laquelle, pour affaiblir des champs extérieurs dans le dispositif (20) d'excitation, il y a un blindage (30) pour affaiblir les champs magnétiques et électriques produits par les courants dans la tête (11) de bobine, dans l'enroulement (10) statorique, ainsi que par l'inductance de la roue (5) polaire, et le matériau du blindage (30) est un matériau d'une grande perméabilité et d'une petite conductivité électrique, le blindage (30, 30') comportant une enveloppe extérieure en matériau non conducteur magnétiquement, et le blindage magnétique propre étant formé en revêtant l'enveloppe d'un matériau de grande perméabilité ou étant constitué par des anneaux en un matériau de grande perméabilité, par exemple en métal Mu.

2. Machine synchrone suivant la revendication 1, dans laquelle il y a deux couches pour l'inductance (5) à roue polaire de la machine, **caractérisée en ce que** le dispositif (20) d'excitation est disposé entre les deux couches (3, 3').

3. Machine synchrone suivant la revendication 1 ou la revendication 2, **caractérisée en ce que** le blindage (30) est constitué tournant.

4. Machine synchrone suivant l'une des revendications 1 ou la revendication 2, **caractérisée en ce que** le blindage (30) est constitué non tournant.

5. Machine synchrone suivant l'une des revendications 1 à 4, **caractérisée en ce que** le matériau de blindage (30) est ce que l'on appelle un « Soft Magnetic Composites » (SMC).

6. Machine synchrone suivant la revendication 1, **caractérisée en ce que** le blindage est constitué sous la forme d'un cylindre (30) creux, le cylindre (30) creux formant comme enveloppe une enveloppe partielle ou complète du dispositif (20) d'excitation.

7. Machine synchrone suivant la revendication 3, **caractérisée en ce que** le blindage (30) tournant forme ou entoure l'enveloppe complète tournante du dispositif (20) d'excitation.

8. Machine synchrone suivant l'une des revendications précédentes, **caractérisée en ce que** l'enveloppe extérieure est en un matériau résistant à la corrosion, par exemple en acier fin, et **en ce que** le revêtement en un matériau de grande perméabilité se trouve sur la face intérieure de l'enveloppe.

9. Machine synchrone suivant l'une des revendications précédentes, **caractérisée en ce que** l'enveloppe (30) peut être remplacée en tout ou partie.

10. Machine synchrone suivant l'une des revendications précédentes, **caractérisée en ce que** le dispositif (20) d'excitation est constitué d'une partie tournante et d'une partie fixe, qui sont couplées pour la transmission d'énergie sans contact au moyen d'un transmetteur (25).

11. Machine synchrone suivant l'une des revendications précédentes, **caractérisée en ce que** le transmetteur (25) contient des anneaux (26) de ferrite.

12. Machine synchrone suivant la revendication 10, qui comporte un arbre (4) de diamètre assez grand, **caractérisée en ce que** la partie tournante du dispositif (20) d'excitation est disposée, y compris l'électronique d'excitation, dans un espace (42) libre à l'intérieur de l'arbre (4, 41).

13. Machine synchrone suivant la revendication 6, **caractérisée en ce qu'**à l'intérieur du blindage cylindrique creux, il y a au moins un élément (31, 31') en un matériau bon conducteur magnétiquement, qui sert de concentrateur de champ.

14. Machine synchrone suivant la revendication 13, **caractérisé en ce que** le au moins un élément (31, 31') est en un matériau bon conducteur magnétiquement dans la direction radiale et a des traversées de ligne pour l'électronique d'excitation répartie de part et d'autre de l'élément (31, 31').
